# EUROPÄISCHE PATENTANMELDUNG

(11) **EP 4 838 624 A1**
(43) Veröffentlichungstag der Anmeldung: **11.11.2026**
(21) Anmeldenummer: 25175461.0
(22) Anmeldetag: 09.05.2025
(51) Int. Cl.: H01M 10/613, H01M 10/647, H01M 10/6556, H01M 10/6568, H01M 50/209, H01M 50/264

(54) **SYSTEM MIT EINEM TRAGRAHMEN UND BATTERIEMODULEN**

(71) Anmelder: HOPPECKE Systemtechnik GmbH, 08056 Zwickau (DE)
(72) Erfinder: RODSCHA, Drabon, 33154 Salzkotten (DE); HERRMANN, Matthias, 08064 Zwickau (DE); RICHTER, Björn, 33106 Paderborn (DE); TENHAGEN, JUlian, 33100 Paderborn (DE)
(74) Vertreter: Brinkmann & Partner

(57) **Zusammenfassung**

Die Offenbarung betrifft ein System mit einem Tragrahmen (2) und einer Mehrzahl von vom Tragrahmen (2) aufgenommener Batteriemodule (3), wobei in Batteriemodul (3) ein Gehäuse (4) und eine Mehrzahl von im Gehäuse (4) angeordneter Lithiumzellen (5) aufweist, wobei das Gehäuse (4) einen Grundkörper (9) mit einem Gehäuseboden (12) aufweist, in den ein Fluidkanal (13) integriert ist, wobei der Tragrahmen (2) ein Tragprofil (18) mit einer einen Fluidkanal (22) bereitstellenden Hohlkammer (23) aufweist, wobei das Tragprofil (18) je Batteriemodul (3) einen mit dem Fluidkanal (22) in strömungstechnischer Wirkverbindung stehenden Fluidanschluss (33) bereitstellt, wobei ein Batteriemodul (3) einen zu einem Fluidanschluss (33) des Tragprofils (18) korrespondierend ausgebildeten Fluidanschluss (43) aufweist, der in strömungstechnischer Wirkverbindung mit dem Fluidkanal (13) des Batteriemoduls (3) steht, wobei die Fluidanschlüsse (33, 34) von Tragprofil (18) und Batteriemodul (3) dazu eingerichtet sind, eine lösbare, gleichwohl aber fluiddichte Strömungsverbindung auszubilden.

## Beschreibung

Die Erfindung betrifft ein System mit einem Tragrahmen und einer Mehrzahl von Batteriemodulen, die im endmontierten Zustand vom Tragrahmen aufgenommen sind.

Ein systemisches Batteriemodul ist aus dem Stand der Technik an sich bekannt, so zum Beispiel aus der WO 2024/193817 A1. Es verfügt über ein Gehäuse und über eine Mehrzahl von im Gehäuse angeordneten Batteriezellen, bei denen es sich um Lithiumzellen handelt. Die Lithiumzellen sind elektrisch miteinander verschaltet und in Gehäuselängsrichtung typischerweise in Reihe hintereinander angeordnet. Es können je Gehäuse mehrerer solcher Reihen an Lithiumzellen vorgesehen sein.

Batteriemodule dieser Bauart finden insbesondere als Traktionsmodule für den Bahnverkehr Verwendung. Im Fokus stehen dabei insbesondere oberleitungsfreie Bahnstrecken, die mit rein elektrifizierten Zügen bedient werden, was einen Batteriebetrieb erforderlich macht.

Insbesondere als Traktionsmodule genutzte Batteriemodule mit Lithiumzellen bedürften einer Modulkühlung, um einen bestimmungsgemäßen Modulbetrieb sicherzustellen und um einem möglichen Havariefall infolge einer zu starken Wärmeentwicklung entgegenzuwirken. Ein gattungsgemäßes Batteriemodul verfügt zu diesem Zweck über ein Gehäuse, das einen Grundkörper mit einem Gehäuseboden aufweist, in den ein Fluidkanal integriert ist. Im bestimmungsgemäßen Verwendungsfall kann durch den vom Gehäuseboden bereitgestellten Fluidkanal ein Kühlmedium zur Kühlung der vom Batteriemodul bereitgestellten Lithiumzellen hindurchgeführt werden. Als Kühlmittel kommt dabei insbesondere Wasser zur Anwendung.

Der Fluidkanal eines jeden Batteriemoduls verfügt über einen Fluideingangsanschluss und einen Fluidausgangsanschluss. Diese Anschlüsse gestatten es, entsprechende Zu- und Abführungsleitungen insbesondere in der Ausgestaltung als Schläuche an den Fluidkanal eines Batteriemoduls fluidtechnisch anschließen zu können. Es besteht dabei auch die Möglichkeit, mehrere Batteriemodule fluidtechnisch in Reihe hintereinander anzuordnen, indem der Fluideingangsanschluss eines Batteriemoduls mit dem Fluidausgangsanschluss eines in Durchströmungsrichtung vorgeschalteten Batteriemoduls fluidtechnisch verbunden wird.

Im endmontierten Zustand sind die einzelnen Batteriemodule von einem Tragrahmen aufgenommen. Dieser Tragrahmen ist typischerweise als Teil eines Gestells oder Regals ausgebildet, der mehrere Batteriemodul-Anordnungen in Höhenrichtung übereinander aufnimmt. Im Ergebnis ist so eine Batterieeinheit gebildet, die aus einer Mehrzahl von Batteriemodulen gebildet ist, wobei eine bestimmte Anzahl von Batteriemodulen in einer Ebene angeordnet und von einem Tragrahmen aufgenommen ist.

Obgleich sich vorbeschriebene Batteriemodule und Tragrahmen im alltäglichen Praxiseinsatz bewährt haben, besteht Verbesserungsbedarf. Insbesondere ist es angestrebt, bei gleichzeitiger Sicherstellung einer hinreichenden Versorgung der einzelnen Batteriemodule mit Kühlmittel eine vereinfachte Montage und Wartung im Betriebsfall zu ermöglichen. Der Erfindung liegt deshalb die **Aufgabe** zugrunde, ein System der eingangs genannten Art konstruktiv dahingehend weiterzuentwickeln, dass bei einem gleichzeitig sicheren Kühlbetrieb eine vereinfachte verwenderseitige Handhabung gegeben ist.

Zur **Lösung** dieser Aufgabe wird mit der Erfindung vorgeschlagen ein System mit einem Tragrahmen und einer Mehrzahl von vom Tragrahmen aufgenommener Batteriemodule, wobei ein Batteriemodul ein Gehäuse und eine Mehrzahl von im Gehäuse angeordneter Batteriezellen, insbesondere Lithiumzellen aufweist, wobei das Gehäuse einen Grundkörper mit einem Gehäuseboden aufweist, in den ein Fluidkanal integriert ist, wobei der Tragrahmen ein Tragprofil mit einer einen Fluidkanal bereitstellenden Hohlkammer aufweist, wobei das Tragprofil je Batteriemodul einen mit dem Fluidkanal in strömungstechnischer Verbindung stehenden Fluidanschluss bereitstellt, wobei ein Batteriemodul einen zu einem Fluidanschluss des Tragprofils korrespondierend ausgebildeten Fluidanschluss aufweist, der in strömungstechnischer Wirkverbindung mit dem Fluidkanal des Batteriemoduls steht, wobei die Fluidanschlüsse von Tragprofil und Batteriemodul dazu eingerichtet sind, eine lösbare, gleichwohl aber fluiddichte Strömungsverbindung auszubilden.

Das erfindungsgemäße System verfügt über einen Tragrahmen und mehrere Batteriemodule, die vom Tragrahmen aufgenommen sind, wobei im Unterschied zum Stand der Technik nicht nur die Batteriemodule jeweils einen Fluidkanal zur Verfügung stellen, sondern auch der Tragrahmen. Zu diesem Zweck verfügt der Tragrahmen über ein Tragprofil, das mit einer Hohlkammer ausgerüstet ist, die einen Fluidkanal bereitstellt. Sowohl ein jedes Batteriemodul als auch das mit dem Fluidkanal ausgestattete Tragprofil verfügen über entsprechende Fluidanschlüsse, so dass im endmontierten Zustand eine strömungstechnische Wirkverbindung zwischen dem tragrahmenseitigen Fluidkanal einerseits und den batteriemodulseitigen Fluidkanälen andererseits ausgebildet ist.

Eine Beschickung eines jeden Batteriemoduls mit Kühlmittel kann mithin in vorteilhafter Weise durch den vom Tragrahmen bereitgestellten Fluidkanal hindurch stattfinden. Eine separate Verschlauchung eines jeden Batteriemoduls ist nicht erforderlich. Der Tragrahmen des erfindungsgemäßen Systems erfüllt mithin zweierlei Funktionen. Zum einen dient er einer mechanischen Abstützung der Batteriemodule und zum anderen stellt er die fluidtechnische Versorgung der Batteriemodule mit Kühlmittel sicher. Dies erbringt im Ergebnis eine vereinfachte Handhabung, da eine Einzelverschlauchung der Batteriemodule nicht erforderlich ist, was sowohl bei einer Erstausrüstung als auch im späteren Wartungsfall von Vorteil ist. Ferner bietet das erfindungsgemäße System eine gesteigerte Betriebssicherheit, da der vom Tragrahmen bereitgestellte Fluidkanal besser vor ungewollten äußeren Einflüssen geschützt ist, insbesondere gegenüber mechanischen Krafteinwirkungen, als dass dies bei einer aus dem Stand der Technik vorbekannten Verschlauchung der Fall ist.

Zur Erzielung dieser vorbeschriebenen Vorteile weist der Tragrahmen ein Tragprofil auf, das über eine einen Fluidkanal bereitstellende Hohlkammer verfügt. Ferner ist vorgesehen, dass das Tragprofil je Batteriemodul einen mit dem Fluidkanal in strömungstechnischer Wirkverbindung stehenden Fluidanschluss aufweist. Der Fluidkanal des Tragprofils steht mithin mit einem Fluidanschluss in strömungstechnischer Wirkverbindung, wobei je Batteriemodul ein solcher Fluidanschluss vorgesehen ist. Es können je nach Ausführung auch zwei oder mehrere Fluidanschlüsse je Batteriemodul vorgesehen sein.

Ein Batteriemodul verfügt seinerseits über einen mit dem batteriemoduleigenen Fluidkanal in strömungstechnischer Wirkverbindung stehenden Fluidanschluss. Dabei ist der batteriemodulseitige Fluidanschluss korrespondierend zu dem tragprofilseitigen Fluidanschluss ausgebildet, so dass im bestimmungsgemäßen Verwendungsfall eine fluiddichte Verbindung zwischen diesen beiden Fluidanschlüssen ausgebildet werden kann.

Dabei sind erfindungsgemäße die beiden Fluidanschlüsse von Tragprofil und Batteriemodul dazu eingerichtet, eine lösbare, gleichwohl aber fluiddichte Strömungsverbindung auszubilden. Dabei stellt die fluiddichte Strömungsverbindung einen sicheren Kühlmittelbetrieb der einzelnen Batteriemodule sicher. Die lösbare Ausgestaltung erbringt den Vorteil einer vereinfachten Montage und auch Demontage insbesondere im Reparaturfall, insbesondere bei einem Austausch von Batteriemodulen.

Mit der Erfindung wird insgesamt ein System vorgeschlagen, das über einen Tragrahmen verfügt, der eine Doppelfunktion erfüllt. Er dient zum einen der mechanischen Abstützung der davon im endmontierten Zustand aufgenommenen Batteriemodule und zum anderen dazu, eine Kühlmittelversorgung der Batteriemodule bereitzustellen, so dass auf eine bisher erforderliche Verschlauchung der einzelnen Batteriemodule verzichtet werden kann. Dies erbringt nicht nur eine vereinfachte Montage und eine vereinfachte Handhabung im Wartungsfall, es ist auch eine gesteigerte Betriebssicherheit erreicht, da die Fluidzuführung zu den einzelnen Batteriemodulen insbesondere besser vor äußeren Einflüssen geschützt ist. Hierzu gehört auch, dass es nicht zu einem ungewollten Trennen der fluidtechnischen Verbindung zur Kühlmittelversorgung kommen kann, wie dies beispielsweise bei einer Verschlauchung durch den Abriss oder das Einklemmen eines einzelnen Schlauches der Fall ist.

Gemäß einem weiteren Merkmal der Erfindung ist vorgesehen, dass ein Tragprofil eine Hohlkammer aufweist, die zwei strömungstechnisch miteinander verbundene Fluidkanäle bereitstellt. Alternativ können die beiden von der Hohlkammer bereitgestellten Fluidkanäle auch strömungstechnisch voneinander separiert sein. In diesem Fall dient der eine Fluidkanal als Zulaufkanal und der andere Fluidkanal als Rücklaufkanal. Dabei ist im Falle einer strömungstechnischen Wirkverbindung von Zulaufkanal und Rücklaufkanal ein quasi durchgängiger Kanal geschaffen, an dem die Fluidkanäle der Batteriemodule sowohl zulaufseitig als auch ablaufseitig jeweils angeschlossen sind. Alternativ hierzu kann gemäß einer zweiten Ausführungsalternative vorgesehen sein, dass der Zulaufkanal und der Rücklaufkanal strömungstechnisch voneinander separiert sind. In diesem Fall sind die Batteriemodule eingangsseitig ausschließlich an den Zulaufkanal und ausgangsseitig ausschließlich an den Rücklaufkanal strömungstechnisch angeschlossen.

Gemäß dieser Ausführungsform der Erfindung ist von der Hohlkammer eines Tragprofils nicht nur ein Fluidkanal bereitgestellt, sondern es sind von der Hohlkammer zwei Fluidkanäle bereitgestellt. Es können insbesondere ein Zulaufkanal und ein Rücklaufkanal vorgesehen sein, die gemäß einer ersten Ausführungsalternative über eine strömungstechnische Verbindung miteinander gekoppelt sind. Über den Zulaufkanal wird im bestimmungsgemäßen Betriebsfall Kühlmittel zu den Batteriemodulen gefördert. Über den Rücklaufkanal wird das die Batteriemodule wieder verlassende Kühlmedium abgefördert. Beide Kanäle sind platzsparend innerhalb ein- und desselben Tragprofils untergebracht.

Bei dem Tragprofil kann es sich vorzugsweise um ein stranggepresstes Aluminiumprofil handeln. Für einen fluiddichten Verschluss ist dieses einendseitig wie anderendseitig durch entsprechende Stopfen verschlossen. Die im Inneren des Tragprofils ausgebildete Hohlkammer kann dann als Fluidkanal dienen. Soll die vom Tragprofil bereitgestellte Hohlkammer nicht nur einen Fluidkanal, sondern mehrere Fluidkanäle ausbilden, so ist die Hohlkammer durch in Längsrichtung der Hohlkammer verlaufende Trennwände in entsprechende Kanalabschnitte zu unterteilen. Eine solche Trennwand wird vorzugsweise einstückig mit dem Stranggussprofil ausgebildet.

Gemäß einem weiteren Merkmal der Erfindung ist vorgesehen, dass ein tragprofilseitiger Fluidkanal strömungstechnisch voneinander separierte Strömungsabschnitte aufweist. Gemäß diesem Merkmal der Erfindung ist der Fluidkanal eines Tragprofils in Längsrichtung in voneinander separierte Kompartments, das heißt Durchströmungsabschnitte unterteilt. Diese Durchströmungsabschnitte stehen nicht direkt in fluidtechnischer Verbindung, sondern indirekt unter Zwischenschaltung eines jeweiligen Batteriemoduls. Durch diese Unterteilung des Fluidkanals in Durchströmungsabschnitte ist eine Kurzschlussströmung vermieden, das heißt eine Kühlmittelströmung durch den tragprofilseitigen Fluidkanal hindurch, ohne dass eine Abzweigung von Kühlmittel in eines der Batteriemodule strömungstechnisch erzwungen ist. Eine solche Kurzschlussströmung ist durch das Bereitstellen voneinander fluidtechnisch getrennter Durchströmungsabschnitte sicher unterbunden, was die Betriebssicherheit steigert.

Gemäß einem weiteren Merkmal der Erfindung ist vorgesehen, dass der Tragrahmen ein zweites Tragprofil aufweist, das eine einen Fluidkanal bereitstellende Hohlkammer aufweist.

Es kommen gemäß dieser Ausführungsform nicht nur ein Tragprofil, sondern zwei Tragprofile zum Einsatz, die jeweils zur Bereitstellung wenigstens eines Fluidkanals eine Hohlkammer aufweisen. Im bestimmungsgemäßen Verwendungsfall können beide Hohlkammern beider Tragprofile in strömungstechnischer Wirkverbindung mit den daran strömungstechnisch angeschlossenen Batteriemodulen bzw. den davon bereitgestellten Fluidkanälen stehen. Insbesondere ist es gestattet, die Hohlkammer des einen Tragprofils als Zulaufkanal und die Hohlkammer des anderen Tragprofils als Ablaufkanal zu nutzen. Beide Hohlkammern können jeweils als Sammelkammern ausgebildet sein oder über in jeweiliger Längsrichtung hintereinander separiert voneinander ausgebildete Durchströmungsabschnitte verfügen.

Gemäße einem weiteren Merkmal der Erfindung ist vorgesehen, dass der Tragrahmen eine Mehrzahl von miteinander verbundenen Tragprofilen aufweist, die leiterförmig angeordnet sind. Dabei können die Tragprofile zur Ausbildung eines tragstabilen Tragrahmens miteinander verschweißt, verschraubt oder sonst wie verbunden sein. Im endmontierten Zustand ist der Tragrahmen leiterförmig ausgebildet, das heißt er verfügt über zwei in Längsrichtung des Tragrahmens verlaufende Tragprofile einerseits sowie eine Mehrzahl von quer hierzu ausgerichteten Tragprofilen andererseits. Im endmontierten Zustand sind die quer ausgerichteten Tragprofile einendseitig am ersten in Längsrichtung verlaufenden Tragprofil und anderendseitig am zweiten in Längsrichtung verlaufenden Tragprofil angeordnet. Hierdurch entsteht eine insgesamt leiterförmige Tragrahmenanordnung.

Gemäß einem weiteren Merkmal der Erfindung ist vorgesehen, dass allein die in Längsrichtung des Tragrahmens verlaufende Tragprofile über eine einen Fluidkanal bereitstellende Hohlkammer verfügt. Die quer verlaufenden Tragprofile des Tragrahmens sind aus Vollmaterial gebildet. Aus Gründen einer erwünschten Gewichtsreduzierung können auch die quer verlaufenden Tragprofile als Hohlkammerprofile ausgebildet sein. In diesem Fall dient die Ausgestaltung von Hohlkammern aber nicht der späteren Hindurchführung eines Fluids, sondern allein dazu, eine Gewichtsersparnis zu erzielen.

Gemäß einer alternativen bevorzugten Ausführungsform verfügt der Tragrahmen ausschließlich über zwei in Längsrichtung verlaufende Tragprofile. Quer verlaufende Tragprofile sind gemäß dieser Ausführungsform nicht vorgesehen. Im endmontierten Zustand sind die Gehäuse der Batteriemodule sowohl mit dem einen Tragprofil als auch mit dem anderen Tragprofil verbunden, vorzugsweise lösbar verbunden, beispielsweise verschraubt. Dabei können zur fluidtechnischen Versorgung der batteriemodulseitigen Fluidkanäle mit Kühlmittel beide Tragprofile jeweils über eine entsprechende Hohlkammer verfügen oder nur eines der beiden Tragprofile weist eine entsprechende Hohlkammer auf. Die mechanische Stabilität der Gesamtkonstruktion ist durch die direkte Verbindung der einzelnen Batteriemodulgehäuse mit den längs verlaufenden Tragprofilen des Tragarmes gegeben. Dabei ist es bevorzugt, dass der von einem jeweiligen Gehäuse bereitgestellte Gehäuseboden einendseitig mit dem einen Tragprofil und anderendseitig mit dem anderen Tragprofil verbunden ist. Die Tragprofile dienen in diesem Fall als eine Art Verbindungselement, über welches die einzelnen damit verbundenen Batteriemodule miteinander gekoppelt sind. Zur standsicheren Unterbringung in einem Regal, einem Container und/oder dergleichen Gestell, verfügt ein jedes Tragprofil über entsprechende Verbindungsabschnitte, die im einfachsten Fall Bohrungen zur Aufnahme von Verbindungsmitteln bereitstellen.

Gemäß einem weiteren Merkmal der Erfindung ist vorgesehen, dass ein in Längsrichtung des Tragrahmens verlaufendes Tragprofil tragrahmenaußenseitig mit einem sich in Längsrichtung des Tragrahmens erstreckenden Blechstreifen ausgerüstet ist.

Im endmontierten Zustand stützt sich ein vom Tragrahmen aufgenommenes Batteriemodul ausschließlich oder insbesondere auf den längs verlaufenden Tragprofilen ab. Um trotz der Hohlkammerausgestaltung dieser Tragprofile ein ungewolltes Durchbiegen zu vermeiden, sind Verstärkungsstrukturen vorgesehen, insbesondere in Form von Blechstreifen, die tragrahmenaußenseitig an den in Längsrichtung verlaufenden Tragprofilen angebracht sind. In Querrichtung dienen diese Blechstreifen zudem als Lagefixierung für vom Tragrahmen aufgenommene Batteriemodule einerseits und als Positionierhilfen insbesondere im Erstmontagefall andererseits. Die Blechstreifen können mit den zugehörigen Tragprofilen insbesondere verschweißt sein.

Gemäß einem weiteren Merkmal der Erfindung ist vorgesehen, dass ein Fluidanschluss eine quer zum zugehörigen Fluidkanal verlaufende Bohrung aufweist.

Ein Fluidanschluss sowohl an einen Fluidkanal eines Tragprofils als auch an den Fluidkanal eines Batteriemoduls verfügt über eine Bohrung, und zwar über eine quer zum zugehörigen Fluidkanal verlaufende Bohrung. Rahmenseitig ist eine solche Bohrung auf der dem Batteriemodul im endmontierten Zustand zugewandten Oberseite des Tragrahmens angeordnet. Modulseitig ist eine solche Bohrung vom Gehäuseboden bereitgestellt, und zwar von der den Lithiumzellen zugewandten Unterseite des Gehäusebodens.

Gemäß einem weiteren Merkmal der Erfindung ist in diesem Zusammenhang vorgesehen, dass die Bohrung eines tragrahmenseitigen Fluidanschlusses und die Bohrung eines batteriemodulseitigen Fluidanschlusses im endmontierten Zustand unter Zwischenordnung eines Dichtmittels übereinanderliegend angeordnet sind. Im endmontierten Zustand liegen mithin die Bohrungen der miteinander korrespondierenden Fluidanschlüsse übereinander. Auf diese Weise ist eine fluidtechnische Verbindung zwischen den einzelnen Fluidanschlüssen und damit auch zwischen den jeweils zugehörigen Fluidkanälen ausgebildet. Die Ausbildung einer solchen fluidtechnischen Verbindung erfolgt in denkbar einfacher Weise dadurch, dass ein Batteriemodul positionsrichtig auf dem Tragrahmen positioniert wird. Allein durch die positionsrichtige Anordnung des Batteriemoduls auf dem Tragrahmen werden die einander zugehörigen Bohrungen der jeweiligen Fluidanschlüsse in Höhenrichtung übereinander angeordnet, so dass eine fluidtechnische Verbindung ausgebildet ist. Weiterer Verbindungsmaßnahmen zur Ausgestaltung einer fluidtechnischen Verbindung sind nicht erforderlich, was eine besonders einfache Montage und auch Demontage insbesondere im Reparaturfall ermöglicht.

Um sicherzustellen, dass im bestimmungsgemäßen Verwendungsfall eine fluidtechnisch dichte Verbindung zwischen zwei Fluidanschlüssen ausgebildet ist, sind die zugehörigen Bohrungen der Fluidanschlüsse im endmontierten Zustand unter Zwischenordnung eines Dichtmittels in Höhenrichtung übereinander liegend angeordnet. Dieses Dichtmittel sorgt für eine fluidtechnische Abdichtung um die jeweiligen Bohrungen herum, so dass im Ergebnis eine fluidtechnisch dichte Verbindung steht.

Gemäß einem weiteren Merkmal der Erfindung ist in diesem Zusammenhang vorgesehen, dass das Dichtmittel ein O-Ring ist. Dieser ist im bestimmungsgemäßen Verwendungsfall in einfacher Weise im Bereich zugehöriger Bohrungen zwischen dem Tragrahmen und einem Batteriemodul anzuordnen.

Um eine solche O-Ring-Anordnung zu erleichtern, ist gemäß einem weiteren Merkmal der Erfindung vorgesehen, dass die Bohrung eines Fluidanschlusses eine einen Hinterschnitt bereitstellende Rille zur Aufnahme des O-Rings aufweist. In diese Rille kann der zugehörigen O-Ring positionssicher eingesetzt und auch vormontiert werden. Dabei stellt die Rille sicher, dass der O-Ring im bestimmungsgemäßen Verwendungsfall nicht auswandern kann und im Übrigen positionssicher gehalten ist. Der von der Rille bereitgestellte Hinterschnitt sorgt zudem dafür, dass nach einer Anordnung des O-Rings in der Rille dieser verliersicher gehalten ist, was eine Vormontage in vorteilhafter Weise gestattet.

Gemäß einem weiteren Merkmal der Erfindung ist vorgesehen, dass die Bohrung des mit dem Fluidanschluss zusammenwirkenden Fluidanschlusses eine umlaufende Versenkungsnut aufweist, in die der O-Ring im endmontierten Zustand eingreift.

Der in die vorbeschriebene Rille eingesetzte O-Ring steht im endmontierten Zustand über die Wirkoberfläche des die Rille bereitstellenden Bauteils hinaus vor. Im endmontierten Zustand kann so eine fluiddichte Verbindung zum benachbarten Bauteil ausgebildet werden. Für eine positionsgenaue und -sichere Aufnahme des über die Wirkoberfläche hinaus vorstehenden Abschnitts des O-Rings durch die Gegenkontur verfügt Letztere über eine umlaufende Versenkungsnut. In diese Versenkungsnut greift der O-Ring im endmontierten Zustand zumindest teilweise ein, so dass insgesamt eine formschlüssige Aufnahme des O-Rings gegeben ist, wobei die geometrischen Ausgestaltungen von Rille und Versenkungsnut derart aufeinander abgestimmt sind, dass der O-Ring unter Ausbildung einer dauerhaft fluiddichten Verbindung unter federelastischer Vorspannung an den jeweiligen Dichtflächen von Rille und Vertiefungsnut anliegt.

Ein Batteriemodul verfügt typischerweise über eine Mehrzahl von Batteriezellen, insbesondere Lithiumzellen, so dass insgesamt ein Eigengewicht bereitgestellt ist, das ausreichend ist, um bei einem auf einem Tragrahmen bestimmungsgemäß abgestelltem Batteriemodul für eine fluidtechnisch dichte Verbindung zwischen den rahmenseitigen Fluidkanälen einerseits und dem batteriemodulseitigen Fluidkanal andererseits zu sorgen. Gleichwohl ist gemäß einem weiteren Merkmal der Erfindung vorgesehen, dass ein Batteriemodul mit dem Tragrahmen mechanisch verbunden ist, beispielsweise verschraubt ist. Durch diese mechanische Verbindung ist einerseits sichergestellt, dass ein Batteriemodul positionssicher am Tragrahmen angeordnet ist. Zum anderen ist durch diese mechanische Verbindung sichergestellt, dass die zwischen einem Batteriemodul und einem Tragrahmenprofil angeordneten O-Ringe federelastisch vorgespannt gehalten werden, was eine fluiddichte Verbindung der zugehörigen Fluidkanäle zusätzlich unterstützt.

Gemäß einem weiteren Merkmal der Erfindung ist vorgesehen, dass ein Tragrahmen Positionsmarkierungen zur positionsgenauen Anordnung eines Batteriemoduls am Tragrahmen aufweist. Derlei Positionsmarkierungen dienen dazu, die positionsrichtige Anordnung eines Batteriemoduls am Tragrahmen in einfacher Weise ausfindig machen zu können. Dabei dient diese positionsgenaue Ausrichtung insbesondere dazu, neben einer mechanisch korrekten Anordnung des Batteriemoduls am Tragrahmen auch dafür Sorge zu tragen, dass es zur Ausbildung einer fluiddichten Verbindung zwischen den einzelnen von den Batteriemodulen bereitgestellten Fluidkanälen und dem zugehörigen Fluidkanal eines Tragprofils sicher kommt.

Gemäß einem weiteren Merkmal der Erfindung ist vorgesehen, dass der Tragrahmen Gummi-Metall-Elemente aufweist.

Diese Gummi-Metall-Elemente dienen dazu, einen Tragrahmen in einem Regal, einem Container und/oder dergleichen Aufbewahrungsgestell positionssicher anzuordnen. Dabei erfüllen solche Gummi-Metall-Elemente zweierlei Funktionen. Zum einen dienen sie der Schwingungsdämpfung, was auch unter mechanischen Krafteinwirkungen zu einer lagestabilen Anordnung der Tragrahmen im zugehörigen Gestell führt. Zum anderen ist ein Toleranzausgleich gegeben, der insbesondere dann erforderlich ist, wenn das die Tragrahmen aufnehmende Gestell geschweißt ist und etwaige Schweißnähte einer positionsrichtigen und -genauen Ausrichtung eines Tragrahmens entgegenstehen. Die Gummi-Metall-Elemente schaffen hier Abhilfe, da sie einen Toleranzausgleich insbesondere gegenüber Fertigungstoleranzen ermöglichen. Im konstruktiv einfachsten und deshalb auch bevorzugten Ausführungsfall verfügt ein Tragrahmen ausschließlich über längs verlaufende Tragprofile. Ein jedes dieser Tragprofile verfügt einendseitig sowie anderendseitig über eine Bohrung zur Verbindung mit einem Aufbewahrungsgestell. In jede Bohrung ist ein Gummi-Metall-Element der eingangsgenannten Art eingesetzt. Dabei verfügt ein Gummi-Metall-Element über zwei Metallhülsen, die koaxial unter Zwischenordnung eines Gummi-Elements, beispielsweise in der Ausgestaltung einer Gummihülse, angeordnet sind. Unter Zwischenordnung dieser Gummi-Metall-Elemente ist im endmontierten Zustand eine beidseitige Verschraubung eines Tragprofils mit einem Aufbewahrungsgestell ermöglicht. Je nach Längenausgestaltung des Tragprofils können selbstverständlich auch mehrere solcher Verschraubungspunkte vorgesehen sein, beispielsweise ein zusätzlicher Verschraubungspunkt, der mittig zu den beiden Endverschraubungspunkten ausgerichtet ist.

Das Gehäuse eines systemseitigen Batteriemoduls verfügt über einen im Querschnitt U-förmig ausgebildeten Grundkörper. Dieser Grundkörper stellt einen Gehäuseboden einerseits und zwei daran angeordnete Seitenwände andererseits bereit. Im endmontierten Zustand nimmt der Grundkörper die Lithiumzellen des Batteriemoduls auf, wobei die Lithiumzellen in Längsrichtung der Seitenwände, das heißt in Gehäuselängsrichtung in Reihe hintereinander angeordnet sind.

Im endmontieren Zustand sind die Lithiumzellen vom Gehäuseboden des Grundkörpers aufgenommen, werden mithin von diesem getragen. Ein seitlicher Schutz der Lithiumzellen ist durch die am Gehäuseboden angeordneten Seitenwände gewährleistet.

In Ergänzung zu den Seitenwänden können auch Stirnwände vorgesehen sein, die in ihrer Ausrichtung quer zu den Seitenwänden verlaufen und den Grundkörper stirnseitig verschließen. Dabei können die Stirnwände sowohl mit den Seitenwänden als auch mit dem Gehäuseboden verbunden sein.

In den Gehäuseboden ist ein in Gehäuselängsrichtung verlaufender Fluidkanal integriert. Dieser dient im bestimmungsgemäßen Verwendungsfall des Batteriemoduls als Kühlkanal und ist von einem als Kühlmittel dienenden Fluid durchströmt. Dabei ist der Fluidkanal in den Gehäuseboden integriert und nicht als separates Bauteil in der Ausgestaltung beispielsweise einer Kühlplatte vorgesehen.

Es ist bevorzugt, im Gehäuseboden eines Batteriemoduls einen weiteren Fluidkanal vorzusehen. Es können zwei, drei oder noch mehr Fluidkanäle vorgesehen sein, die jeweils in Gehäuselängsrichtung verlaufen, das heißt parallel zueinander ausgerichtet sind. Dabei sind die Fluidkanäle in Gehäusequerrichtung vorzugsweise abstandsgleich zueinander ausgebildet.

Es ist besonders bevorzugt, je Reihe an Lithiumzellen einen Kühlkanal vorzusehen. Demnach ist einer Reihe von hintereinander angeordneten Lithiumzellen ein Fluidkanal zugeordnet. Bei mehreren Reihen von jeweils in Längsrichtung hintereinander angeordneten Lithiumzellen sind der Anzahl der Reihen entsprechend viele Fluidkanäle vorgesehen, so dass jeder Reihe von Lithiumzellen ein Fluidkanal zugeordnet ist. Im Ergebnis ist so eine optimierte Kühlung der Lithiumzellen sichergestellt.

Sofern zwei oder mehrere in Längsrichtung des Gehäuses verlaufende Fluidkanäle vorgesehen sind, ist es bevorzugt, dass in den Gehäuseboden ein die Fluidkanäle strömungstechnisch miteinander verbindender Querkanal integriert ist. Es ist so strömungstechnisch ein geschlossenes Kanalsystem gegeben, womit im bestimmungsgemäßen Verwendungsfall Fluid von Fluidkanal zu Fluidkanal strömen kann, und zwar durch die Querkanäle, mittels welcher die Fluidkanäle strömungstechnisch miteinander gekoppelt sind. Im einfachsten Ausführungsfall sind zwei parallel verlaufende Fluidkanäle vorgesehen, die über einen gemeinsamen Querkanal strömungstechnisch miteinander gekoppelt sind. In diesem Fall kann über den einen Fluidkanal zugeführtes Fluid über den Querkanal in den anderen Fluidkanal überführt werden und umgekehrt. Das Kanalsystem ist in diesem Fall U-förmig ausgebildet.

Weitere Merkmale und Vorteile der Erfindung ergeben sich aus der nachfolgenden Beschreibung anhand der Fign. Dabei zeigen
- Fig. 1: in schematischer Perspektivansicht ein systemseitiges Batteriemodul;
- Fig. 2: in schematischer Schnittdarstellung das Batteriemodul nach Fig. 1 gemäß Schnittlinie II-II;
- Fig. 3: in einer schematischen Detailansicht das Batteriemodul nach Fig. 2 gemäß Ausschnitt III;
- Fig. 4: in schematischer Draufsicht von oben einen systemseitigen Tragrahmen;
- Fig. 5: in schematischer Draufsicht von oben einen bestimmungsgemäß mit Batteriemodulen 3 besetzten Tragrahmen 2;
- Fig. 6: in schematischer Schnittdarstellung das aus Tragrahmen 2 und Batteriemodulen 3 gebildete System 1 gemäß Schnittlinie VI-VI nach Fig. 5;
- Fig. 7: in einer schematischen Darstellung einen Strömungsverlauf gemäß einer ersten Ausführungsform;
- Fig. 8: in einer schematischen Darstellung einen Strömungsverlauf gemäß einer zweiten Ausführungsform;
- Fig. 9: in einer schematischen Darstellung einen Strömungsverlauf gemäß einer dritten Ausführungsform;
- Fig. 10: in einer schematischen Darstellung einen Strömungsverlauf gemäß einer vierten Ausführungsform;
- Fig. 11: in einer schematischen Darstellung einen Strömungsverlauf gemäß einer fünften Ausführungsform;
- Fig. 12: in einer schematischen Darstellung einen Strömungsverlauf gemäß einer sechsten Ausführungsform;
- Fig. 13: in schematischer Perspektivansicht ein erfindungsgemäßes System gemäß einer bevorzugten Ausführungsform;
- Fig. 14: in schematischer Perspektivansicht das System nach Figur 13 in teilmontiertem Zustand;
- Fig. 15: in schematischer Perspektivansicht einen systemseitigen Tragrahmen;
- Fig. 16: in schematischer Seitenansicht das erfindungsgemäße System nach Figur 13;
- Fig. 17: in schematischer Draufsicht von oben das erfindungsgemäße System nach Figur 13;
- Fig. 18: in einer schematischen Schnittdarstellung ausschnittsweise das erfindungsgemäße System gemäß Schnittline A-A gemäß Figur 17;
- Fig. 19: in schematischer Schnittdarstellung ausschnittsweise das erfindungsgemäße System gemäß Schnittlinie B-B nach Figur 17;
- Fig. 20: in schematischer Schnittdarstellung ausschnittsweise das erfindungsgemäße System gemäß Schnittlinie C-C nach Figur 17 und
- Fig. 21: in schematischer Detailansicht vergrößert den Ausschnitt nach Figur 19.

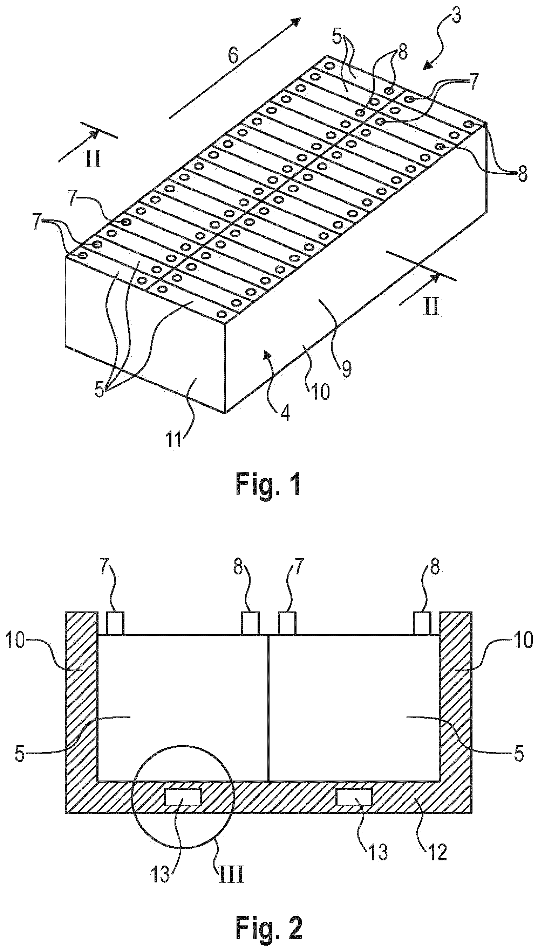

Fig. 1 lässt in schematischer Perspektivansicht von oben ein Batteriemodul 3 eines erfindungsgemäßen Systems 1 erkennen.

Das Batteriemodul 3 verfügt über ein Gehäuse 4 und über eine Mehrzahl von Lithiumzellen 5, die innerhalb des Gehäuses 4 angeordnet sind. Wie die Darstellung nach Fig. 1 erkennen lässt, sind die Lithiumzellen 5 in Gehäuselängsrichtung 6 in Reihe hintereinander angeordnet. Dabei nimmt das Gehäuse 4 im dargestellten Ausführungsbeispiel zwei Reihen von Lithiumzellen 5 auf, nämlich eine mit Bezug auf die Zeichnungsebene nach Fig. 1 linke, erste Zellenreihe und eine mit Bezug auf die Zeichnungsebene nach Fig. 1 rechte, zweite Zellenreihe.

Wie Fig. 1 ferner erkennen lässt, verfügt eine jede Lithiumzelle 5 über Anschlusspole 7 und 8. Diese dienen einer elektrischen Verbindung der einzelnen Lithiumzellen 5, die der besseren Übersicht wegen in den Fign. nicht näher dargestellt ist.

Wie eine Zusammenschau der Fign. 1 und 2 erkennen lässt, weist das Gehäuse 4 einen Grundkörper 9 auf. Dieser ist im Querschnitt U-förmig ausgebildet und verfügt über einen Gehäuseboden 12 sowie zwei daran angeordnete Seitenwände 10. Im endmontierten Zustand sind die offenen Stirnseiten des Grundkörpers 9 durch entsprechende Stirnwände 11 verschlossen. Dabei nehmen die Stirnwände 11 die Zellenreihen zwischen sich auf. Des Weiteren verfügt das Gehäuse 4 über einen in den Fign. nicht näher dargestellten Deckel. Dieser ist vorzugsweise auswechselbar am Grundkörper 9 angeordnet und deckt die Lithiumzellen 5 polseitig einschließlich einer elektrischen Verkabelung ab.

In den Gehäuseboden 12 ist je Lithiumzellen-Reihe ein in Gehäuselängsrichtung 6 verlaufender Fluidkanal 13 integriert. Dieser Fluidkanal 13 dient im bestimmungsgemäßen Verwendungsfall als Kühlkanal, durch den hindurch ein Kühlmittel geführt ist, bei dem es sich beispielsweise um Wasser handeln kann. Die beiden in Fig. 2 gezeigten Fluidkanäle 13 sind anderendseitig durch einen Querkanal fluidtechnisch miteinander verbunden, so dass ein mit Bezug auf die Grundfläche des Gehäusebodens 12 insgesamt U-förmig ausgebildetes Kanalsystem gegeben ist.

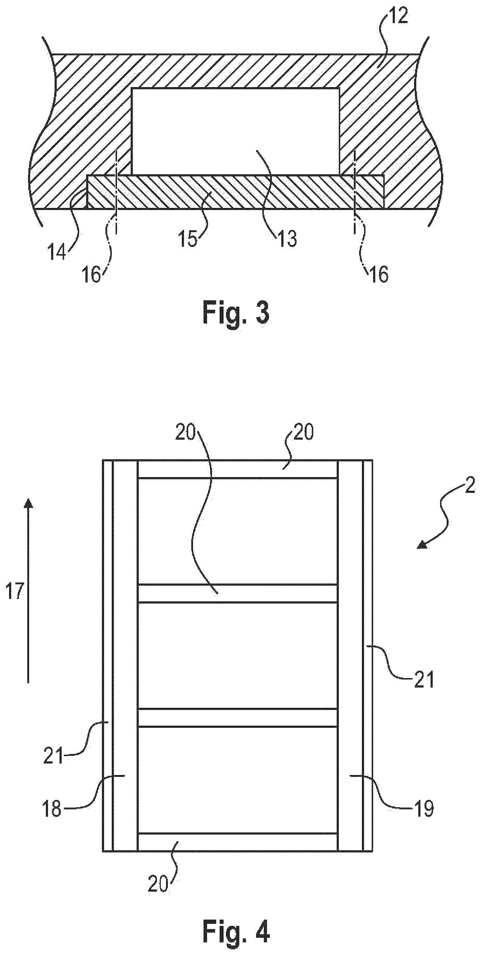

Wie Fig. 3 schematisch erkennen lässt, ist zur Ausbildung des Fluidkanals 13 eine Kanalnut in den Gehäuseboden 12 eingebracht. Diese Kanalnut geht in eine die Kanalnut in Querrichtung überragende Ausnehmung 14 ein, in die zum Verschluss der Kanalnut und zur Ausbildung des Fluidkanals 13 eine Abdeckung 15 eingesetzt ist. Diese Abdeckung 15 ist mittels Verschraubungen 16 mit dem Gehäuseboden 12 mechanisch verbunden. Für einen fluiddichten Verschluss der Kanalnut können zwischen dem Gehäuseboden 12 und der Abdeckung 15 im Bereich der Verschraubungen 16 entsprechende Dichteinrichtungen angeordnet sein.

Fig. 4 lässt in einer schematischen Draufsicht von oben den Tragrahmen 2 des erfindungsgemäßen Systems 1 erkennen.

Der Tragrahmen 2 ist leiterförmig ausgebildet und verfügt über zwei in Längsrichtung 17 verlaufende Tragprofile 18 und 19 einerseits sowie über quer hierzu verlaufende Tragprofile 20 andererseits. Wie die Darstellung nach Fig. 4 in diesem Zusammenhang erkennen lässt, sind die Tragprofile 18 und 19 parallel zueinander verlaufend ausgerichtet. Die Tragprofile 20 sind einendseitig am Tragprofil 18 und anderendseitig am Tragprofil 19 angeordnet. In Längsrichtung 17 sind die Tragprofile 20 vorzugsweise äquidistant zueinander beabstandet.

Außenseitig des Tragrahmens 2 sind an den Tragprofilen 18 und 19 jeweils in Längsrichtung 17 verlaufende Blechstreifen 21 angeordnet.

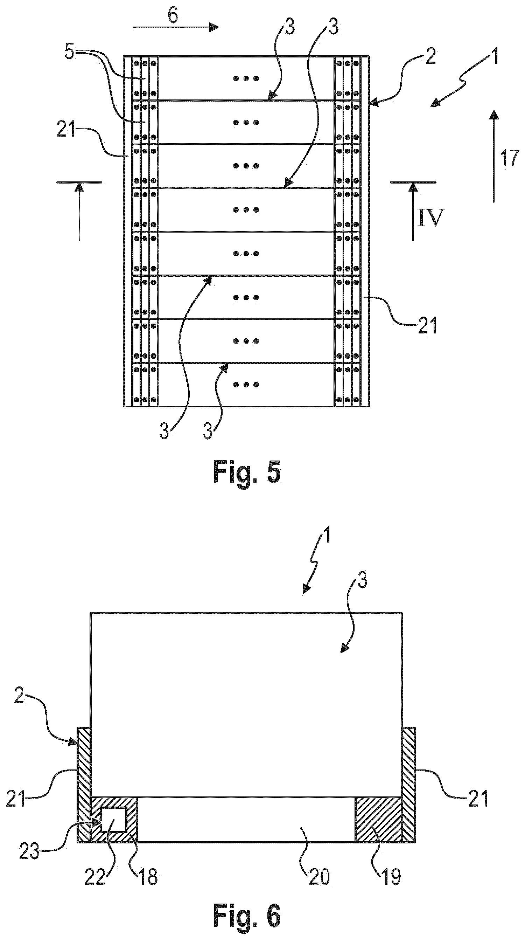

Im endmontierten Zustand nimmt der Tragrahmen 2 eine Mehrzahl von in Längsrichtung 17 hintereinander angeordnete Batteriemodule 3 auf. Die Fign. 5 und 6 zeigen ein System 1 mit vier Batteriemodulen 3, wobei es sich von selbst versteht, dass auch weniger oder mehr Batteriemodule 3 vorgesehen sein können.

Wie insbesondere die Darstellung nach Fig. 6 erkennen lässt, liegt ein Batteriemodul 3 mit Bezug auf die Zeichnungsebene nach Fig. 6 linksseitig auf dem Tragprofil 18 und rechtsseitig auf dem Tragprofil 19 auf. Dabei ist die lichte Weite innenseitig der beiden Blechstreifen 21 in Entsprechung der Breite eines Batteriemoduls 3 ausgebildet. Die Blechstreifen 21 sorgen somit für eine positionsgenaue und sichere Anordnung am Tragrahmen 2.

Wie die Darstellung nach Fig. 6 ferner erkennen lässt, verfügt das mit Bezug auf die Zeichnungsebene nach Fig. 6 linke Tragprofil 18 über eine Hohlkammer 23, die einen Fluidkanal 22 bereitstellt. Im endmontierten Zustand ist dieser Fluidkanal 23 strömungstechnisch an einen Fluidkanal 13 eines Batteriemoduls 3 strömungstechnisch dicht angeschlossen, so dass eine Kühlmittelversorgung des batteriemodulseitigen Fluidkanals 13 durch den tragrahmenseitigen Fluidkanal 22 stattfinden kann.

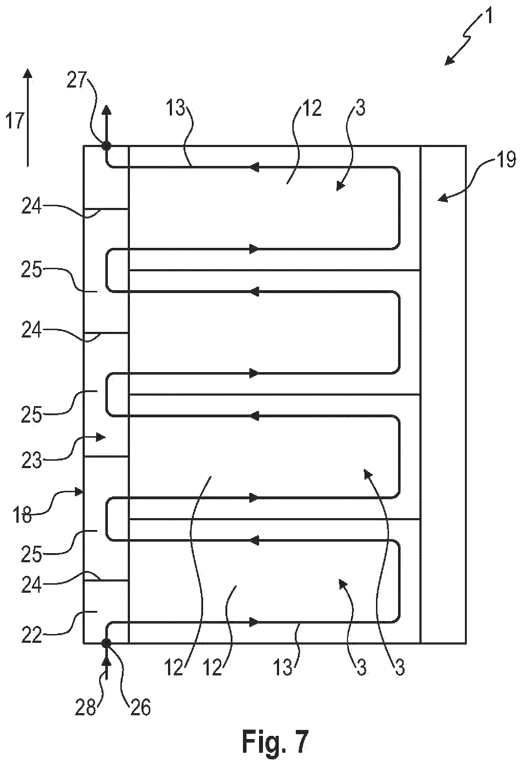

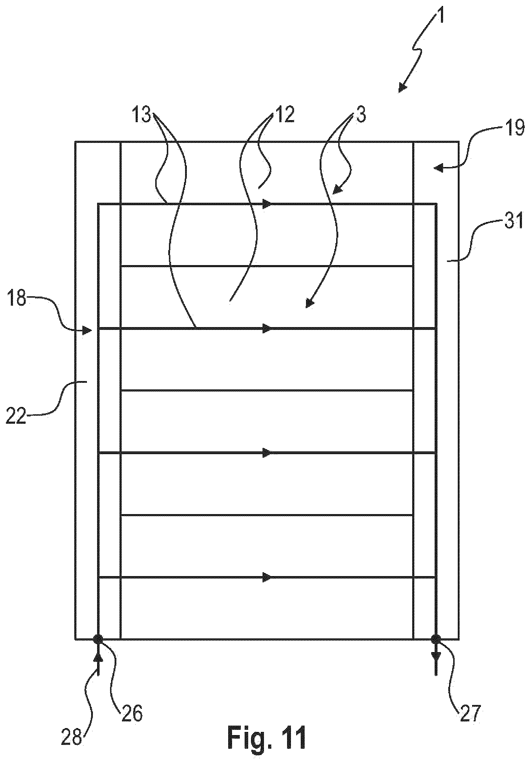

Hinsichtlich der mit der erfindungsgemäßen Konstruktion möglichen Strömungswege 28 wird auf die beispielhaften Ausgestaltungen nach den Fign. 7 und 11 verwiesen, die jeweils schematisch die beiden Tragprofile 18 und 19 sowie vier vom Tragrahmen 2 aufgenommene Batteriemodule 3 zeigen.

Gemäß der Ausführungsform nach Fig. 7 stellt allein das Tragprofil 18 einen Fluidkanal 22 bereit. An diesen Fluidkanal 22 sind die Strömungskanäle 13 der einzelnen Batteriemodule 3 sowohl eingangsseitig als auch ausgangsseitig angeschlossen.

Um eine Kurzschlussströmung zu vermeiden, ist der Fluidkanal 22 mittels entsprechender Trennbleche 24 in strömungstechnisch voneinander separierte Durchströmungsabschnitte 25 unterteilt. Es ist so eine Zwangsströmung gewährleistet, die ausgehend vom Fluidkanal 22 durch die einzelnen Fluidkanäle 13 der Batteriemodule 3 hindurchführt.

Der tragprofilseitige Fluidkanal 22 weist einen Eingangsanschluss 26 und einen Ausgangsanschluss 27 auf. Dabei dient der Eingangsanschluss 26 zur Beschickung mit einem Kühlmedium, das nach einem Passieren der einzelnen Fluidkanäle in Entsprechung des Strömungswegs 28 den Fluidkanal 22 am Ausgangsanschluss 27 wieder verlässt.

Wie die Darstellung nach Fig. 7 erkennen lässt, ist der Gehäuseboden 12 eines jeden Batteriemoduls mit einem U-förmig ausgebildeten Kanalsystem ausgerüstet, wobei die einzelnen Batteriemodule 3 in Längsrichtung 17 der Reihe nach durchströmt werden. Der Fluidkanal 22 dient dabei als Verbindungselement zwischen den einzelnen Fluidkanälen 13 der Batteriemodule 3.

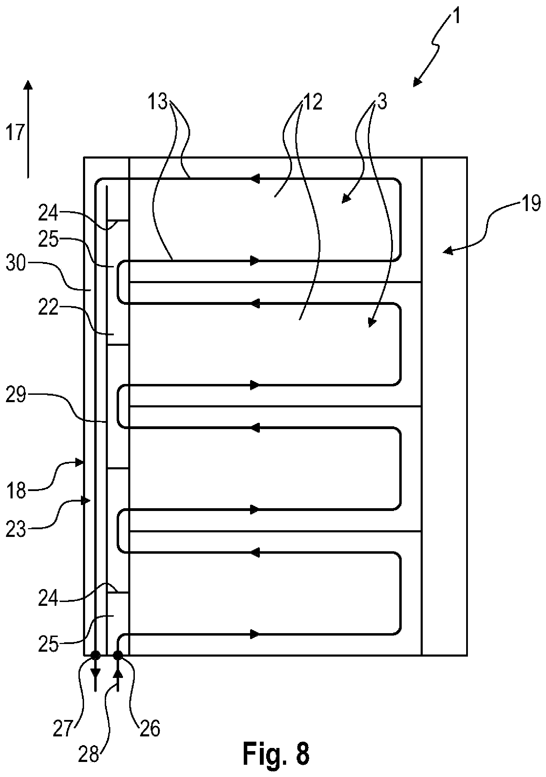

Fig. 8 zeigt eine alternative Ausführungsform. Demgemäß ist die vom Tragprofil 18 bereitgestellte Hohlkammer 23 in zwei Fluidkanäle 22 und 30 unterteilt, die in strömungstechnischer Wirkverbindung stehen. Dabei dient der Fluidkanal 22 einer Zuführung der Batteriemodule 3 mit Kühlfluid und der Fluidkanal 30 dient einer Abführung des Kühlmittels. Dementsprechend sind im Unterschied zur Ausführungsform nach Fig. 7 bei der Ausführungsform nach Fig. 8 der Eingangsanschluss 26 und der Ausgangsanschluss 27 an der gleichen Stirnseite des Tragrahmens 2 ausgebildet.

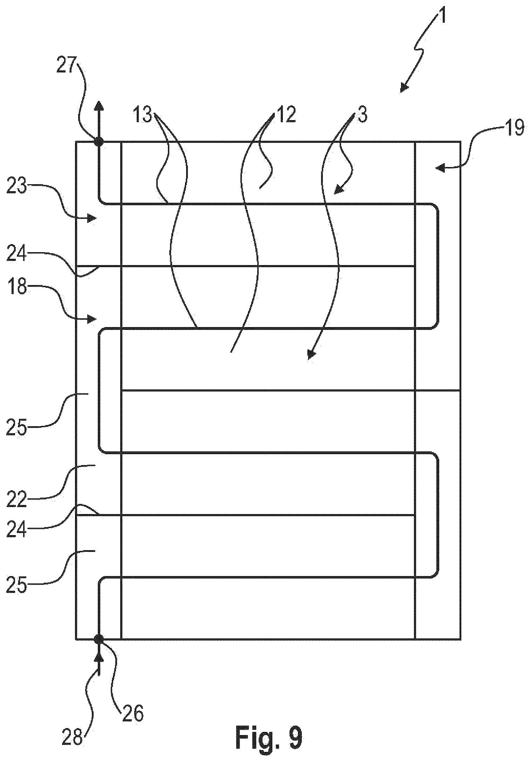

Fig. 9 lässt eine weitere Ausführungsform erkennen. Dabei ist gemäß dieser Ausführungsform nicht nur das Tragprofil 20 mit einem Fluidkanal 22 ausgerüstet, sondern auch das Tragprofil 19. Gemäß dieser Ausführungsform ergibt sich ein Strömungsweg 28 wie in Fig. 9 eingezeichnet.

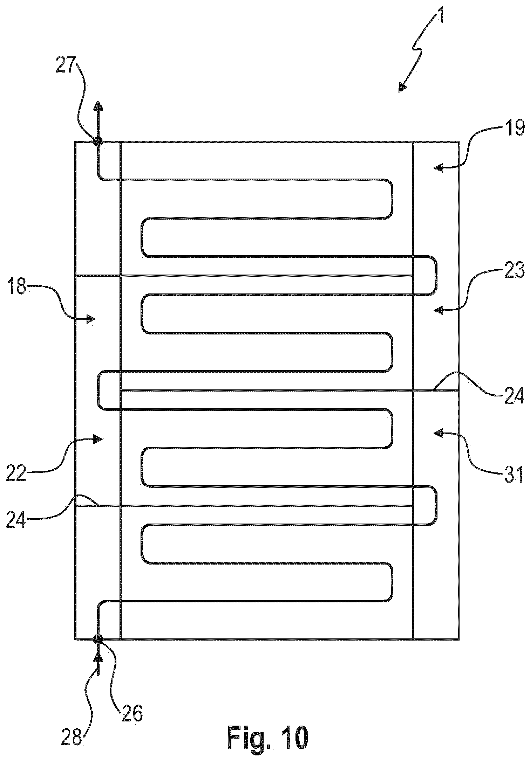

Eine weitere Ausführungsform lässt Fig. 10 erkennen. Im Unterschied zur Ausgestaltung nach Fig. 9 ist bei der Ausgestaltung nach Fig. 10 nicht nur ein Fluidkanal 13 je Batteriemodul 3 vorgesehen, sondern ein jedes Batteriemodul 3 verfügt über drei parallel zueinander verlaufende Fluidkanäle 13. Eine solche Ausgestaltung ist insbesondere bevorzugt, wenn das Batteriemodul 3 über drei Reihen an Lithiumzellen 5 verfügt.

Eine weitere Ausführungsform zeigt Fig. 11. Gemäß dieser Ausführungsform stellen sowohl das Tragprofil 18 als auch das Tragprofil 19 jeweils einen Fluidkanal 22 bzw. 31 bereit. Dabei ist im Unterschied zu den vorerläuterten Ausführungsformen je Fluidkanal 22 bzw. 31 keine Unterteilung in Durchströmungsabschnitte 25 vorgesehen. Beide Fluidkanäle 22 bzw. 31 dienen mithin als Sammelkanäle, was zu einer Parallelbeschickung der jeweiligen modulseitigen Fluidkanäle 13 führt. Der Strömungsweg 28 ist in Fig. 11 entsprechend dargestellt.

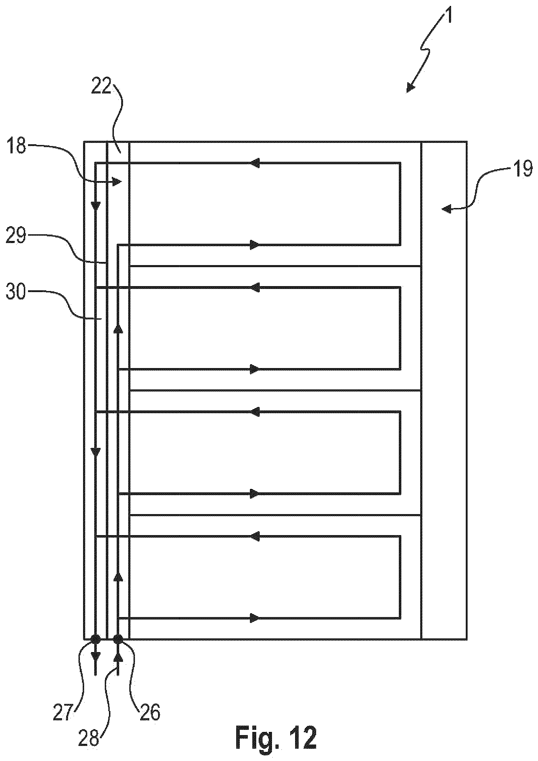

Eine weitere Ausführungsform zeigt Figur 12. Gemäß dieser Ausführungsform stellt allein das Tragprofil 18 Fluidkanäle bereit, nämlich einen ersten als Zulaufkanal dienenden Fluidkanal 22 sowie einen als Rücklaufkanal dienenden Fluidkanal 30. Dabei sind die beiden Fluidkanäle 22 und 30 mittels einer Trennwand 29 strömungstechnisch voneinander separiert. Mit Bezug auf die Zeichnungsebene nach Figur 12 sind die beiden Fluidkanäle 22 und 30 nebeneinander angeordnet, so dass über entsprechend versetzte batteriemodulseitige Fluidanschlüsse ein Sammelzulauf zu den Batteriemodulen 3 über den Fluidkanal 22 und ein Sammelablauf von den Batteriemodulen 3 über den Fluidkanal 30 stattfinden kann. Der Strömungsweg 28 ist in Figur 12 entsprechend dargestellt.

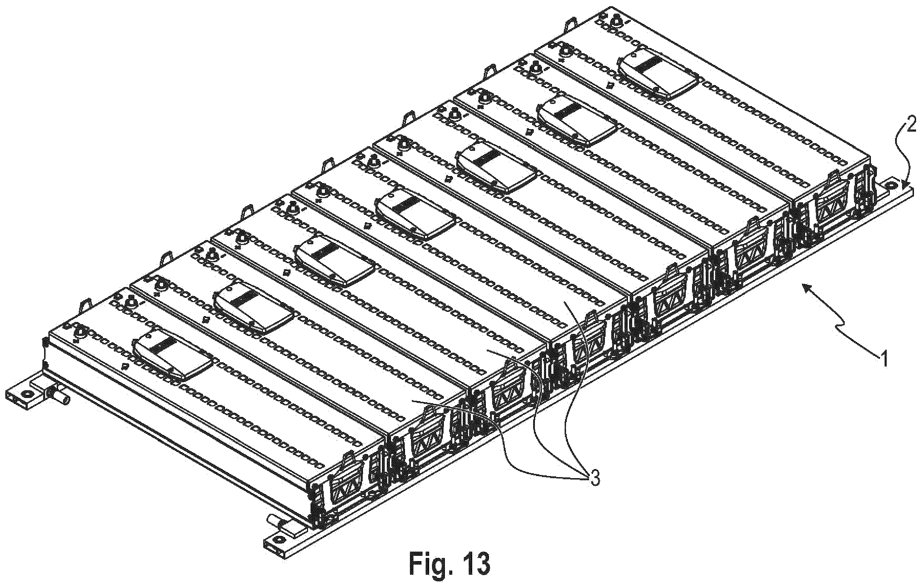

Die weiteren Figuren 13 bis 21 zeigen in jeweils unterschiedlichen Ansichten eine erfindungsgemäßes System 1 gemäß einer bevorzugten Ausführungsform.

Wie sich aus einer Zusammenschau der Figuren 13 bis 15 ergibt, verfügt der Tragrahmen 2 ausschließlich über zwei in Längsrichtung verlaufende Tragprofile 18 und 19. Quer verlaufende Tragprofile sind nicht vorgesehen. Im endmontierten Zustand sind die Batteriemodule 3 gehäuseseitig mit den beiden Tragprofilen 18 und 19 verschraubt, wodurch sind eine hinreichende mechanische Stabilität ergibt.

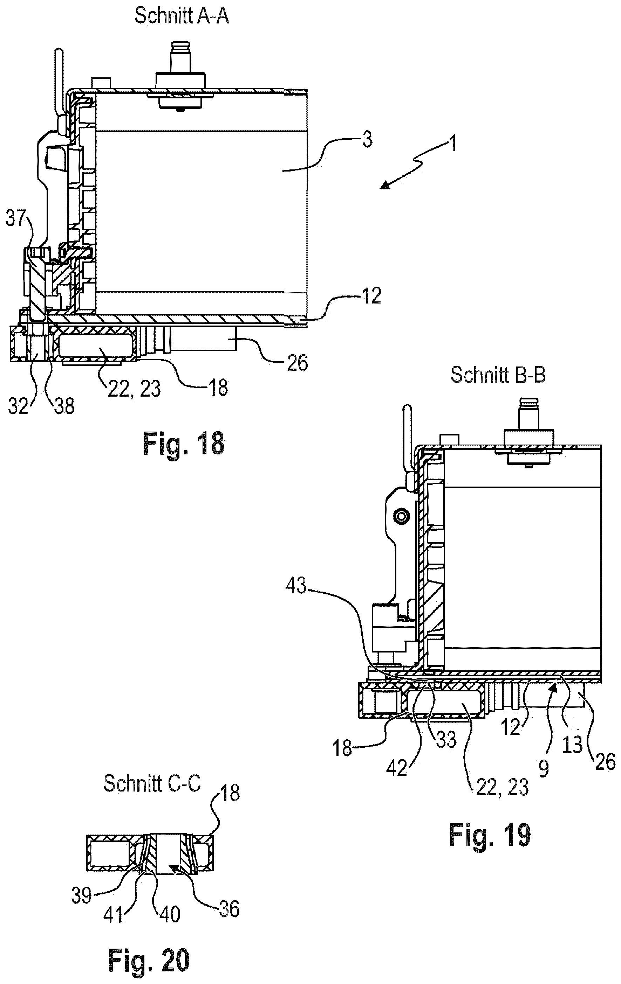

Im gezeigten Ausführungsbeispiel verfügen beiden Tragprofile 18 und 19 jeweils über eine einen Fluidkanal bereitstellende Hohlkammer 23. Dies ist beispielhaft mit Bezug auf das Tragprofil 18 in den Figuren 18 und 19 dargestellt.

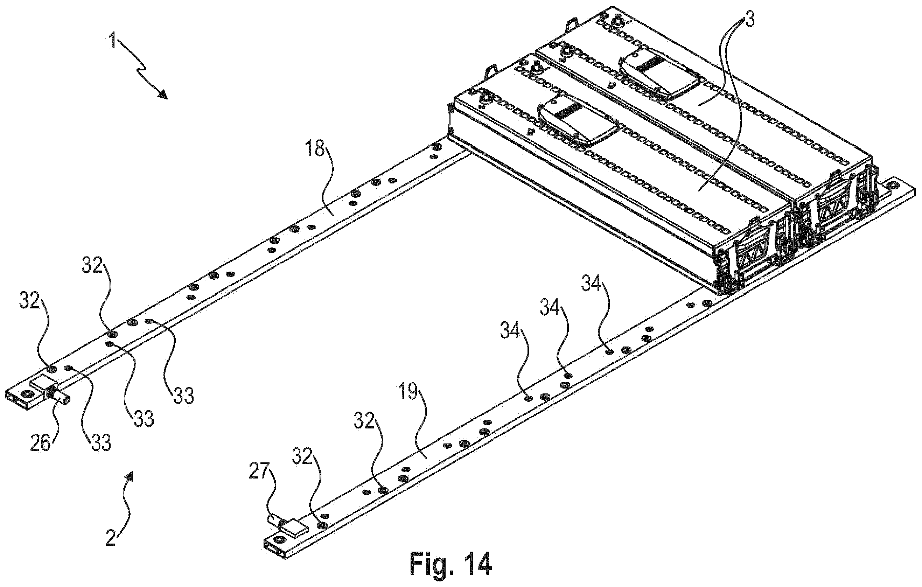

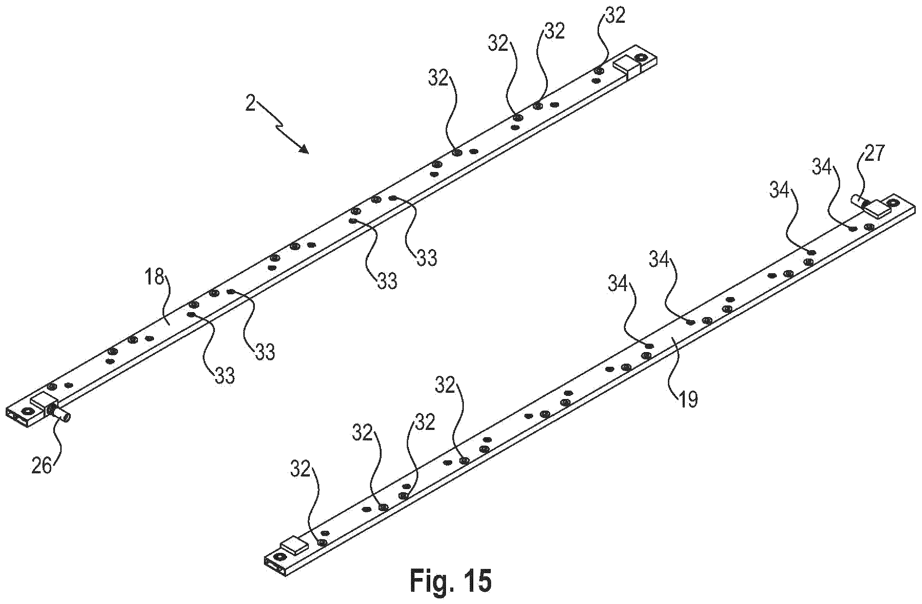

Wie insbesondere die Figuren 14 und 15 erkennen lassen, verfügt ein jedes Tragprofil 18 bzw. 19 je Batteriemodul 3 über zwei Fluidanschlüsse, und zwar das Tragprofil 18 über die Fluidanschlüsse 33 und das Tragprofil 19 über die Fluidanschlüsse 34. Je Tragprofil 18 bzw. 19 ist ferner ein Eingangsanschluss 26 und/oder ein Ausgangsanschluss 27 vorgesehen. Die Figuren 14 und 15 zeigen in diesem Zusammenhang zwei unterschiedliche Ausführungsbeispiele.

Zur Verbindung der Batteriemodule 3 mit den Tragprofilen 18 und 19 verfügen die Tragprofile 18 und 19 jeweils je Batteriemodul 3 über zwei Bohrungen 32. In diese Bohrungen 32 sind im endmontierten Zustand Gewindehülsen 38 eingesetzt, wie dies Figur 18 erkennen lässt. Diese Gewindehülsen 38 dienen einer Verschraubung mit dem Batteriemodul 3, zu welchem Zweck entsprechende Schrauben 37 vorgesehen sind. Figur 18 lässt in diesem Zusammenhang eine noch nicht endfertig montierte Schraube 37 erkennen. Im Ergebnis dieser Ausgestaltung ist ein jedes Batteriemodul 3 mit Bezug auf die Zeichnungsebene nach Figur 14 linksseitig mit dem Tragprofil 18 und rechtsseitig mit dem Tragprofil 19 verschraubt. Dabei sind je Tragprofil 18 bzw. 19 zwei Verschraubungspunkte vorgesehen, was eine mechanisch stabile Gesamtanordnung im endmontierten Zustand ergibt.

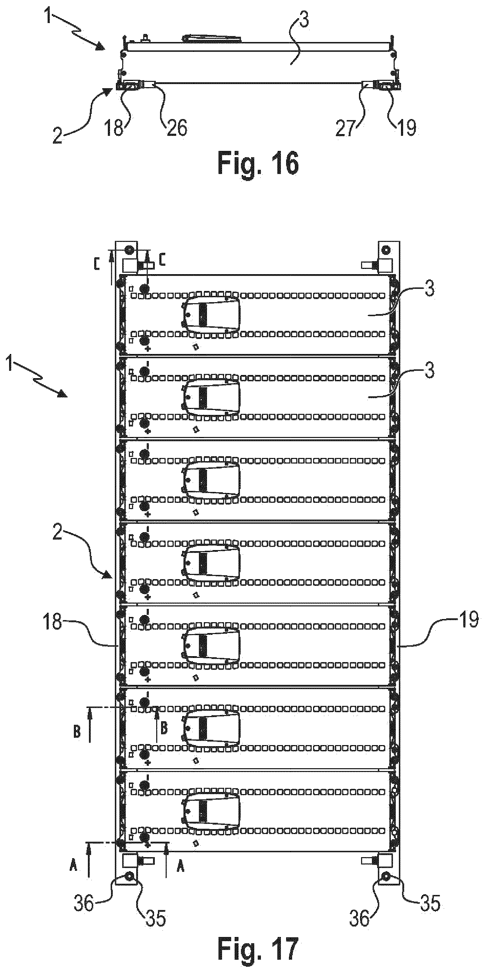

Im endmontierten Zustand ist das in Figur 1 in schematischer Perspektivansicht gezeigten System 1 in ein in den Figuren nicht näher gezeigtes Aufbewahrungsgestell eingesetzt, bei welchem es sich beispielsweise um ein Regal, einen Container, und/oder dergleichen handeln kann. Zur Lagesicherung ist das System 1 gegenüber dem Aufbewahrungsgestell vorzugsweise verschraubt, zu welchem Zweck der Tragrahmen 2 des erfindungsgemäßen Systems 1 über entsprechende Bohrungen 35 verfügt. Gemäß dem in den Figuren 13 bis 21 gezeigten Ausführungsbeispiel sind die Tragprofile 18 und 19 endseitig mit entsprechenden Bohrungen 35 ausgerüstet, wie dies beispielsweise die Draufsicht von oben nach Figur 17 erkennen lässt.

In die Bohrungen 35 sind vorzugsweise Gummi-Metall-Elemente 36 eingesetzt, wie sich insbesondere aus der Darstellung nach Figur 20 ergibt. Die Gummi-Metall-Elemente 36 sind bevorzugterweise als vulkanisierte Elemente ausgeführt. Sie sind in Ebenenrichtung, das heißt in der Ebene der Tragprofile 18 und 19 möglichst steif ausgebildet. In Höhenrichtung der Batteriemodule 3 sind die Gummi-Metall-Elemente 36 indes bevorzugterweise möglichst weich bzw. elastisch ausgebildet, um so in vorteilhafterweise einen Toleranzausgleich dienen zu können.

Wie Figur 20 erkennen lässt, weist ein Gummi-Metall-Element 36 zwei koaxial angeordnete Metallhülsen 39 und 40 auf, zwischen denen eine Gummilage 41 angeordnet ist. Bei der Gummilage 41 kann es beispielsweise um einen Hülsenkörper aus Gummi handeln. Die Gummi-Metall-Elemente 36 dienen der schwingungsgedämpften Anordnung eines erfindungsgemäßen Systems 1 in einem Aufbewahrungsgestell. Ferner können mittels der Gummi-Metall-Elemente 36 aufbewahrungsgesellseitige Herstellungstoleranzen ausgeglichen werden, was eine positionssichere und genaue Anordnung eines erfindungsgemäßen Systems innerhalb eines Aufbewahrungsgestells ermöglicht.

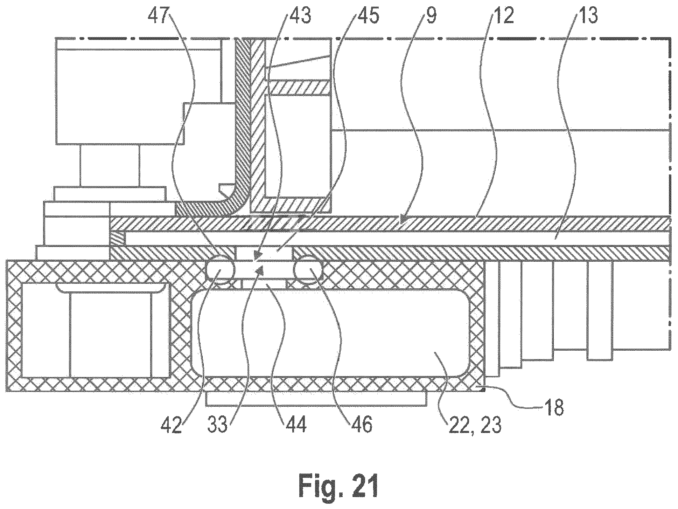

Figur 21 lässt in einer Detailansicht zwei in strömungstechnischer Wirkverbindung stehende Fluidanschlüsse 33 und 43 erkennen. Dabei ist der Fluidanschluss 33 tragrahmenseitig und der Fluidanschluss 43 batterieseitig bereitgestellt.

Wie Figur 21 zeigt, verfügt ein jeder Fluidanschluss 33 bzw. 34 über eine quer zum jeweiligen Fluidkanal 13 bzw. 22 verlaufende Bohrung 45 bzw. 44. Im endmontierten Zustand sind die Bohrungen 44 und 45 einander gegenüberliegend angeordnet und stehen so in fluidtechnischer Verbindung. Im Ergebnis sind die Fluidkanäle 13 und 22 in fluidtechnischer Verbindung.

Für eine fluiddichte Verbindung der Fluidanschlüsse 33 und 43 ist ein Dichtmittel in der Ausgestaltung eines O-Rings 42 vorgesehen. Dieser ist im endmontierten Zustand je Fluidanschluss zwischen dem Tragprofil 18 bzw. dem Tragprofil 19 und einem zugehörigen Batteriemodul 3 angeordnet. Wie sich aus der Darstellung nach Figur 21 ergibt, ist ein O-Ring 42 in einer tragprofilseitigen Rille 46 angeordnet. Diese Rille 46 stellt einen Hinterschnitt bereit, so dass der O-Ring 42 positionsfest innerhalb der Rille 46 gehalten ist.

Die Rille 46 ist in ihren geometrischen Abmessungen derart ausgestaltet, dass der O-Ring 42 im endmontierten Zustand über die batteriemodulseitige Oberfläche des Tragprofils 18 hinaus vorsteht. Dieser hervorstehende Teil des O-Rings 42 greift im endmontierten Zustand in eine batteriemodulseitige Versenkungsnut 47 ein. Auf diese Weise ist eine fluiddichte Verbindung zwischen den beiden zugehörigen Bohrungen 44 und 45 ausgebildet, wobei der O-Ring in Höhenrichtung mit Bezug auf die Zeichnungsebene nach Figur 21 federelastisch zwischen den beiden Fluidanschlüssen 33 und 43 eingeklemmt ist.

### Bezugszeichen

- 1: System
- 2: Tragrahmen
- 3: Batteriemodul
- 4: Gehäuse
- 5: Lithiumzelle
- 6: Längsrichtung
- 7: Anschlusspol
- 8: Anschlusspol
- 9: Grundkörper
- 10: Seitenwand
- 11: Stirnwand
- 12: Gehäuseboden
- 13: Fluidkanal
- 14: Ausnehmung
- 15: Abdeckung
- 16: Verschraubung
- 17: Längsrichtung
- 18: Tragprofil
- 19: Tragprofil
- 20: Tragprofil
- 21: Blechstreifen
- 22: Fluidkanal
- 23: Hohlkammer
- 24: Trennblech
- 25: Durchströmungsabschnitt
- 26: Eingangsanschluss
- 27: Ausgangsanschluss
- 28: Strömungsweg
- 29: Trennwand
- 30: Fluidkanal
- 31: Fluidkanal
- 32: Bohrung
- 33: Fluidanschluss
- 34: Fluidanschluss
- 35: Bohrung
- 36: Gummi-Metall-Element
- 37: Schraube
- 38: Gewindehülse
- 39: Metallhülse
- 40: Metallhülse
- 41: Gummilage
- 42: O-Ring
- 43: Fluidanschluss
- 44: Bohrung
- 45: Bohrung
- 46: Rille
- 47: Versenkungsnut

## Patentansprüche

1. System mit einem Tragrahmen (2) und einer Mehrzahl von vom Tragrahmen (2) aufgenommener Batteriemodule (3), wobei ein Batteriemodul (3) ein Gehäuse (4) und eine Mehrzahl von im Gehäuse (4) angeordneter Batteriezellen, insbesondere Lithiumzellen (5), aufweist, wobei das Gehäuse (4) einen Grundkörper (9) mit einem Gehäuseboden (12) aufweist, in den ein Fluidkanal (13) integriert ist, wobei der Tragrahmen (2) ein Tragprofil (18) mit einer einen Fluidkanal (22) bereitstellenden Hohlkammer (23) aufweist, wobei das Tragprofil (18) je Batteriemodul (3) einen mit dem Fluidkanal (22) in strömungstechnischer Wirkverbindung stehenden Fluidanschluss (33) bereitstellt, wobei ein Batteriemodul (3) einen zu einem Fluidanschluss (33) des Tragprofils (18) korrespondierend ausgebildeten Fluidanschluss aufweist, der in strömungstechnischer Wirkverbindung mit dem Fluidkanal (13) des Batteriemoduls (3) steht, wobei die Fluidanschlüsse (33, 43) von Tragprofil (18) und Batteriemodul (3) dazu eingerichtet sind, eine lösbare, gleichwohl aber fluiddichte Strömungsverbindung auszubilden.

2. System nach Anspruch 1, **dadurch gekennzeichnet, dass** ein Tragprofil (18) eine Hohlkammer (23) aufweist, die zwei strömungstechnisch miteinander verbundene Fluidkanäle (22, 30) bereitstellt.

3. System nach Anspruch 1 oder 2, **dadurch gekennzeichnet, dass** ein tragprofilseitiger Fluidkanal (22) strömungstechnisch voneinander separierte Durchströmungsabschnitte (25) aufweist.

4. System nach einem der vorhergehenden Ansprüche, **dadurch gekennzeichnet, dass** der Tragrahmen (2) ein zweites Tragprofil (19) aufweist, dass eine einen Fluidkanal (31) bereitstellende Hohlkammer (23) aufweist.

5. System nach einem der vorhergehenden Ansprüche, **dadurch gekennzeichnet, dass** der Tragrahmen (2) eine Mehrzahl von miteinander verbundenen Tragprofilen (18, 19, 20) aufweist, die leiterförmig angeordnet sind.

6. System nach einem der vorhergehenden Ansprüche, **dadurch gekennzeichnet, dass** ein in Längsrichtung (17) des Tragrahmens (2) verlaufendes Tragprofil (18, 19) tragrahmenaußenseitig mit einem sich in Längsrichtung (17) des Tragprofils (18,19) erstreckenden Blechstreifen (21) ausgerüstet ist.

7. System nach einem der vorhergehenden Ansprüche, **dadurch gekennzeichnet, dass** ein Fluidanschluss (33, 34, 43) eine quer zum zugehörigen Fluidkanal (13, 22, 30, 31) verlaufende Bohrung (44, 45) aufweist.

8. System nach Anspruch 7, **dadurch gekennzeichnet, dass** die Bohrung (44) eines tragrahmenseitigen Fluidanschlusses (33, 34) und die Bohrung (45) eines batteriemodulseitigen Fluidanschlusses im endmontierten Zustand unter Zwischenordnung eines Dichtmittels übereinander liegend angeordnet sind.

9. System nach Anspruch 8, **dadurch gekennzeichnet, dass** das Dichtmittel ein O-Ring (42) ist.

10. System nach Anspruch 9, **dadurch gekennzeichnet, dass** die Bohrung (44) eines Fluidanschlusses (33, 34) eine einen Hinterschnitt bereitstellende Rille (46) zur Aufnahme des O-Rings (42) aufweist.

11. System nach Anspruch 10, **dadurch gekennzeichnet, dass** die Bohrung (45) des mit dem Fluidanschluss (33, 34) zusammenwirkenden Fluidanschlusses (43) eine umlaufende Versenkungsnut (47) aufweist, in die der O-Ring (42) im endmontierten Zustand eingreift.

12. System nach einem der vorhergehenden Ansprüche, **dadurch gekennzeichnet, dass** der Tragrahmen (2) Positionsmarkierungen zur positionsgenauen Anordnung eines Batteriemoduls (3) am Tragrahmen (2) aufweist.

13. System nach einem der vorhergehenden Ansprüche, **dadurch gekennzeichnet, dass** ein Batteriemodul (3) mit dem Tragrahmen (2) mechanisch verbunden ist.

14. System nach Anspruch 13, **dadurch gekennzeichnet, dass** ein Batteriemodul (3) mit dem Tragrahmen (2) verschraubt ist.

15. System nach einem der vorhergehenden Ansprüche, **dadurch gekennzeichnet, dass** der Tragrahmen (2) Gummi-Metall-Elemente (36) aufweist.

## Geänderte Patentansprüche

### Geänderte Patentansprüche gemäss Regel 137(2) EPÜ.

1. System mit einem Tragrahmen (2) und einer Mehrzahl von vom Tragrahmen (2) aufgenommener Batteriemodule (3), wobei ein Batteriemodul (3) ein Gehäuse (4) und eine Mehrzahl von im Gehäuse (4) angeordneter Batteriezellen, insbesondere Lithiumzellen (5), aufweist, wobei das Gehäuse (4) einen Grundkörper (9) mit einem Gehäuseboden (12) aufweist, in den ein Fluidkanal (13) integriert ist, wobei der Tragrahmen (2) ein erstes Tragprofil (18) mit einer einen Fluidkanal (22) bereitstellenden Hohlkammer (23) und ein zweites Tragprofil (19) mit einer einen Fluidkanal (31) bereitstellenden Hohlkammer (23) aufweist, wobei die Tragprofile (18, 19) mit den Batteriemodulen (3) verschraubt sind und je Batteriemodul (3) einen mit dem Fluidkanal (22) in strömungstechnischer Wirkverbindung stehenden Fluidanschluss (33) und einen mit dem Fluidkanal (31) in strömungstechnischer Wirkverbindung stehenden Fluidanschluss (34) bereitstellen, wobei ein Batteriemodul (3) zu einem Fluidanschluss (33) des Tragprofils (18) sowie zu einem Fluidanschluss (34) des Tragprofils (19) korrespondierend ausgebildete Fluidanschlüsse (43) aufweist, die in strömungstechnischer Wirkverbindung mit dem Fluidkanal (13) des Batteriemoduls (3) stehen, wobei die Fluidanschlüsse (33, 34, 43) von dem ersten Tragprofil (18), dem zweiten Tragprofil (19) und dem Batteriemodul (3) dazu eingerichtet sind, eine lösbare, gleichwohl aber fluiddichte Strömungsverbindung auszubilden, wobei ein Fluidanschluss (33, 34, 43) eine quer zum zugehörigen Fluidkanal (13, 22, 31) verlaufende Bohrung (44, 45) aufweist und wobei die Bohrung (44) eines tragrahmenseitigen Fluidanschlusses (33, 34) und die Bohrung (45) eines batteriemodulseitigen Fluidanschlusses (43) im endmontierten Zustand unter Zwischenordnung eines Dichtmittels übereinanderliegend angeordnet sind.

2. System nach Anspruch 1, **dadurch gekennzeichnet, dass** ein Tragprofil (18) eine Hohlkammer (23) aufweist, die zwei strömungstechnisch miteinander verbundene Fluidkanäle (22, 30) bereitstellt.

3. System nach Anspruch 1 oder 2, **dadurch gekennzeichnet, dass** ein tragprofilseitiger Fluidkanal (22) strömungstechnisch voneinander separierte Durchströmungsabschnitte (25) aufweist.

4. System nach einem der vorhergehenden Ansprüche, **dadurch gekennzeichnet, dass** der Tragrahmen (2) eine Mehrzahl von miteinander verbundenen Tragprofilen (18, 19, 20) aufweist, die leiterförmig angeordnet sind.

5. System nach einem der vorhergehenden Ansprüche, **dadurch gekennzeichnet, dass** ein in Längsrichtung (17) des Tragrahmens (2) verlaufendes Tragprofil (18, 19) tragrahmenaußenseitig mit einem sich in Längsrichtung (17) des Tragprofils (18,19) erstreckenden Blechstreifen (21) ausgerüstet ist,

6. System nach Anspruch 1, **dadurch gekennzeichnet, dass** das Dichtmittel ein O-Ring (42) ist.

7. System nach Anspruch 6, **dadurch gekennzeichnet, dass** die Bohrung (44) eines Fluidanschlusses (33, 34) eine einen Hinterschnitt bereitstellende Rille (46) zur Aufnahme des O-Rings (42) aufweist.

8. System nach Anspruch 7, **dadurch gekennzeichnet, dass** die Bohrung (45) des mit dem Fluidanschluss (33, 34) zusammenwirkenden Fluidanschlusses (43) eine umlaufende Versenkungsnut (47) aufweist, in die der O-Ring (42) im endmontierten Zustand eingreift.

9. System nach einem der vorhergehenden Ansprüche, **dadurch gekennzeichnet, dass** der Tragrahmen (2) Positionsmarkierungen zur positionsgenauen Anordnung eines Batteriemoduls (3) am Tragrahmen (2) aufweist.

10. System nach einem der vorhergehenden Ansprüche, **dadurch gekennzeichnet, dass** der Tragrahmen (2) Gummi-Metall-Elemente (36) aufweist.
